# EUROPÄISCHE PATENTSCHRIFT

(11) **EP 4 004 373 B1**
(45) Veröffentlichungstag und Bekanntmachung des Hinweises auf die Patenterteilung: **18.09.2024**
(21) Anmeldenummer: 20744011.6
(22) Anmeldetag: 20.07.2020
(51) Int. Cl.: F04D 1/00, F04D 29/046, F04D 29/049, F04D 29/06, F16N 7/40

(54) **PUMPENANORDNUNG MIT EINEM SCHMIER- UND KÜHLSYSTEM**
PUMP ASSEMBLY COMPRISING A LUBRICATION- AND COOLING SYSTEM
INSTALLATION DE POMPE COMPORTANT UN SYSTÈME DE LUBRIFICATION ET DE REFROIDISSEMENT

(30) Priorität: 23.07.2019 DE 102019005095
(43) Veröffentlichungstag der Anmeldung: 01.06.2022
(73) Patentinhaber: KSB SE & Co. KGaA, 67227 Frankenthal (DE)
(72) Erfinder: PENSLER, Thomas, 67227 Frankenthal (DE); JÄGER, Christoph, 67227 Frankenthal (DE); ZIEGS, Daniel, 67227 Frankenthal (DE); BONITZ, Hermann, 67227 Frankenthal (DE)
(86) Internationale Anmeldenummer: PCT/EP2020/070425
(87) Internationale Veröffentlichungsnummer: WO 2021/013782

(56) Entgegenhaltungen:
- WO-A1-2013/187786
- CN-U- 205 918 634
- US-A- 5 051 007

## Beschreibung

Die vorliegende Erfindung betrifft eine Pumpenanordnung gemäß dem Oberbegriff des Anspruchs 1.

Derartige Pumpenanordnungen werden in einer Vielzahl von Anwendungen zum Fördern von Fluiden eingesetzt. Werden derartige Pumpenanordnungen für große Leistungsbereiche benötigt, ist meist einer Ölumlaufschmierung erforderlich, um die Lager ausreichend zu schmieren und zu kühlen. Üblicherweise sind dafür eine externe Schmiermittelpumpe, ein Wärmetauscher und viele Hydraulikleitungen erforderlich. Bei Ausfall der Schmiermittelpumpe besteht die Gefahr, dass nach kurzer Zeit auch die Hauptpumpe aufgrund eines Lagerschadens ausfällt.

Aus der CN 205918634 U ist eine Pumpe mit einer in einem Lagerträger ausgebildeten Ölumlaufförderung zur Schmierung der Lager bekannt.

Die WO2013/187786 A1 offenbart einen elektischen Motor für Pumpen mit einem inneren Kühlsystem.

Ein weiteres Schmiersystem für eine Kreiselpumpe ist aus der US 5,051,007 A bekannt.

Es ist Aufgabe der vorliegenden Erfindung eine Pumpenanordnung mit einem möglichst einfachen und zuverlässigen Schmier- und Kühlsystem für die Lager der Pumpenanordnung bereitzustellen.

Dies gelingt mit einer Pumpenanordnung, die sämtliche Merkmale des Anspruchs 1 aufweist.

Weitere vorteilhafte Ausgestaltungen der Erfindung finden sich in den jeweiligen abhängigen Ansprüchen.

Nach dem Anspruch 1 umfasst die Pumpenanordnung zum Fördern eines Mediums eine von einem Hydraulikgehäuse und einem Gehäusedeckel gebildeten Strömungskammer, eine um eine Drehachse drehbar antreibbare Pumpenwelle, ein, an einem innerhalb der Strömungskammer liegenden Ende der Pumpenwelle befestigtes Laufrad und einen Lagerträger. Die Erfindung zeichnet sich durch ein Schmier- und Kühlsystem mit einer im Lagerträger ausgebildeten Ölumlaufförderung aus.

Durch das Vorsehen einer internen Ölumlaufförderung im Lagerträger kann auf eine externe Schmiermittelpumpe, einen Wärmetauscher und diverse Hydraulikleitungen verzichtet werden. Die Zahl der Komponenten wird durch das interne Schmier- und Kühlsystem verringert, dadurch sinkt die Ausfallwahrscheinlichkeit. Die Schmierung der Lager ist auch bei Stromausfall während der Zeit des Nachlaufs der Pumpenwelle gewährleistet.

Nach einer Fortbildung der Erfindung weist ein Rumpfelement des Lagerträgers in seinem Inneren eine erste Lageraufnahme zur Aufnahme eines ersten Lagers und eine zweite Lageraufnahme zur Aufnahme eines zweiten Lagers zur Lagerung einer um eine Drehachse drehbare Pumpenwelle auf.

Bei einer bevorzugten Ausgestaltung ist innerhalb des Lagerträgers bzw. Rumpfelements zwischen dem ersten Lager und dem zweiten Lager ein Förderelement vorgesehen, das an der Pumpenwelle ausgebildet oder als separates Element an der Pumpenwelle angeordnet ist. Dadurch ist eine bauraumsparende Konstruktion möglich.

Vorteilhafterweise ist nahe der ersten Lageraufnahme im Lagerträger wenigstens eine die Pumpenwelle umgebende Kammer vorgesehen. Die Kammer hat dabei in der Draufsicht im Wesentlichen die Form eines Kreisringes. Die Kammer kann zur Aufnahme wenigstens eines Ölfilters ausgebildet sein.

Als vorteilhafte Alternative kann vorgesehen sein, dass die wenigstens eine Kammer durch Trennwandungen in einzelne Segmente unterteilt ist. Die einzelnen Segmente der Kammer haben dabei in der Draufsicht im Wesentlichen die Form eines Kreisringausschnittes. In jedem einzelnen Segment ist wenigstens ein Ölfilter installierbar.

Das Volumen einer Trennwandung kann um ein vielfaches größer sein als das Volumen eines Kammersegments. Dadurch lässt sich die in der Ölumlaufförderung benötigte Ölmenge wesentlich reduzieren.

Erfindungsgemäß ist im Inneren des Lagerträgers ein die Pumpenwelle umgebender Füllkörper vorgesehen. Dadurch lässt sich die in der Ölumlaufförderung benötigte Ölmenge weiter wesentlich reduzieren.

Dabei ist von Vorteil, weil Material sparend, wenn der Füllkörper eine der Pumpenwelle zugewandte Innenwandung und eine der Pumpenwelle abgewandte Außenwandung umfasst, die einen Hohlraum bilden.

Für eine optimale Ölumlaufförderung ist bei einer erfindungsgemäßen Ausgestaltung der Füllkörper derart angeordnet und in seiner radialen Ausdehnung derart dimensioniert, dass zwischen Füllkörper und Pumpenwelle ein erster Ringraum und zwischen Füllkörper und der Außenwandung des Lagerträgers ein zweiter Ringraum entsteht.

Auf diese Weise lassen sich optimale Strömungskanäle innerhalb des Lagerträgers bzw. des Rumpfelementes schaffen.

Bei einer vorteilhaften weiteren erfindungsgemäßen Ausführungsform ist zwischen Füllkörper und Pumpenwelle ein erster Ringraum vorgesehen, wobei sich der Füllkörper in radialer Richtung bis an die Innenmantelfläche der Außenwandung des Lagerträgers erstreckt und wenigstens eine Nut an der Außenseite der Außenwandung des Füllkörpers vorgesehen ist. Dadurch lässt sich eine besonders stabile Lage des Füllkörpers erreichen.

Bei einer vorteilhaften Ausgestaltung erstreckt sich ein ringförmiger Vorsprung in einen Bereich innerhalb des Lagerdeckels, an dessen freier Stirnseite wenigstens eine Aussparung vorgesehen ist. Auf diese Weise lassen sich einfache und effektive Strömungskanäle schaffen.

Dass an der freien Stirnseite des Vorsprungs eine Leiteinrichtung angebracht ist, ermöglicht eine verlustoptimierte Umlenkung bei der Ölumlaufförderung.

Nach einer bevorzugten Ausführung der Erfindung ist am Rumpfelement eine Lüfterhaube befestigt, wobei innerhalb der Lüfterhaube ein Lüfterrad an der Pumpenwelle angebracht ist. Das Lüfterrad erzeugt einen Luftstrom, der durch die Lüfterhaube umgelenkt und über die Außenseite des Lagerträgers geführt wird. Dadurch steigt der Wärmeübergang vom oberen Lagerträger an die Umgebungsluft an.

Eine besonders einfache und effektive Ausgestaltung für das Förderelement ergibt sich, wenn das Förderelement ein Ringelement umfasst. Bei dieser Ausgestaltung weist das Ringelement eine erste Stirnseite und eine der ersten Stirnseite gegenüberliegende zweite Stirnseite auf.

Dabei ist von Vorteil, wenn auf der Außenmantelfläche des Ringelementes wenigstens eine Schaufel angeordnet ist, die sich von einem Bereich nahe der ersten Stirnseite in diagonaler Richtung zu einem Bereich nahe der zweiten Stirnseite erstreckt. Dadurch ist die Schaufel bzw. sind die Schaufeln derart ausgebildet, dass in beiden Drehrichtungen eine Förderung des Öls erfolgt. Somit bleibt bei einem eventuellen Stromausfall, bei dem sich die Drehrichtung der Pumpenwelle umkehren kann, trotzdem eine ausreichende Ölumlaufförderung und somit Schmierung der Lager und Kühlung des Schmiermittels erhalten.

Weitere Vorteile, Einzelheiten und Merkmale werden aus der nachfolgenden Beschreibung der Figuren ersichtlich. Es zeigt
- Fig. 1: die Schnittansicht einer erfindungsgemäßen Pumpenanordnung mit einem internen Schmier- und Kühlsystem,
- Fig. 2: eine Teilansicht in geschnittener Darstellung der Pumpenanordnung gemäß Fig. 1,
- Fig. 3: die Draufsicht eines in der Pumpenanordnung gemäß Fig. 1 eingesetzten Füllkörpers und
- Fig. 4: eine detaillierte Darstellung eines in der Pumpenanordnung gemäß Fig. 1 eingesetzten Förderelements.

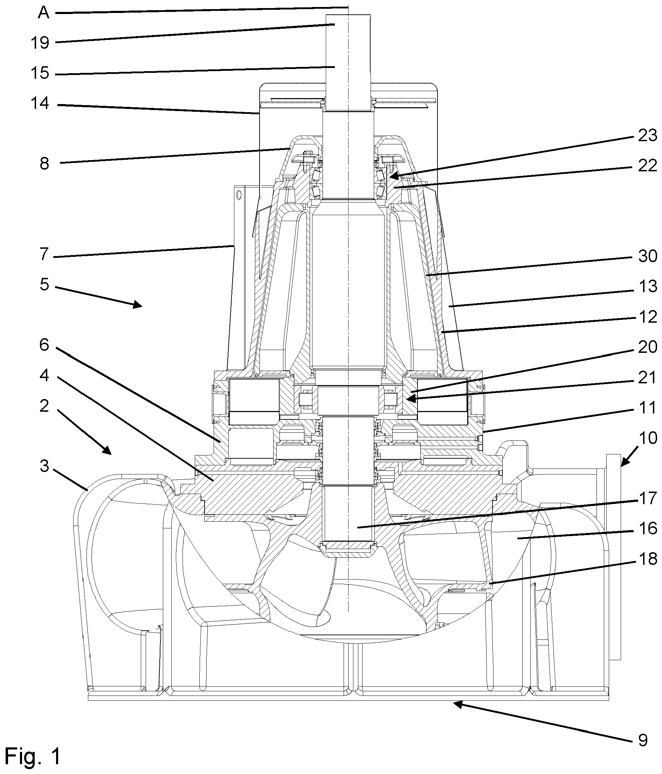

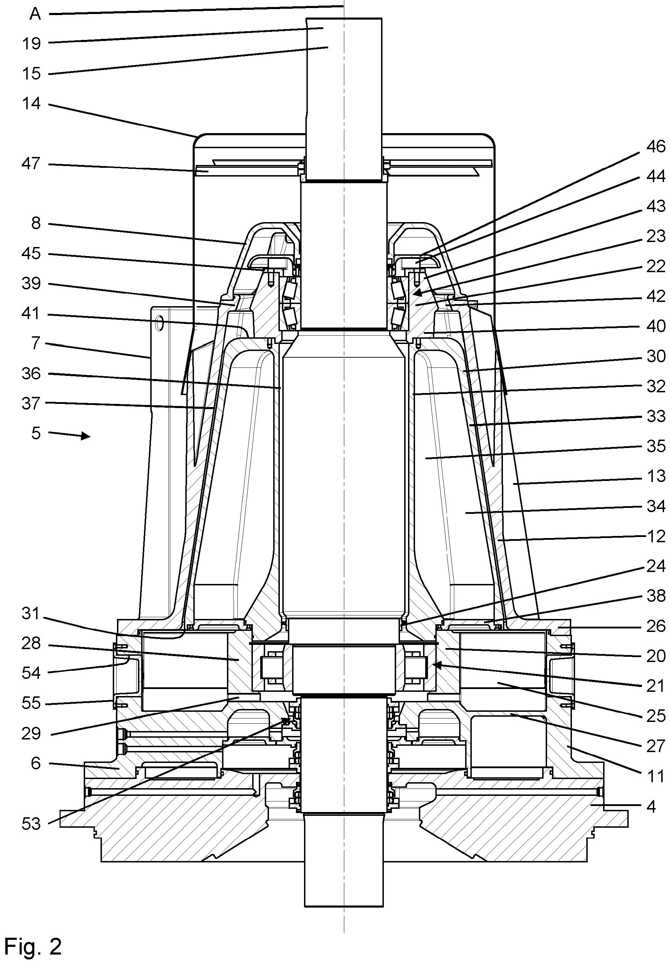

Die Fig. 1 in Verbindung mit Fig. 2 zeigt eine Pumpenanordnung 1 mit einem Spiralgehäuse 2, welches zumindest aus einem Hydraulikgehäuse 3 und einem das Hydraulikgehäuse 3 auf einer Seite verschließenden Gehäusedeckel 4 gebildet ist. Die Pumpenanordnung 1 umfasst ferner einen Lagerträger 5, der zumindest aus einem ersten Rumpfelement 6, einem zweiten Rumpfelement 7 und einem Lagerdeckel 8 gebildet ist. Die Pumpenanordnung 1 weist ein Schmier- und Kühlsystem mit einer im Lagerträger 5 ausgebildeten Ölumlaufförderung auf.

Das Hydraulikgehäuse 3 weist bei dem Bezugszeichen 9 eine Einlassöffnung zum Ansaugen eines Fördermediums und bei dem Bezugszeichen 10 eine Auslassöffnung zum Ausstoßen des Fördermediums auf. Der Gehäusedeckel 4 ist an der der Einlassöffnung 9 gegenüberliegende Seite des Hydraulikgehäuses 3 angeordnet. Das erste Rumpfelement 6 des Lagerträgers 5 ist am Gehäusedeckel 4 an der dem Hydraulikgehäuse 3 abgewandten Seite des Gehäusedeckels 4 befestigt. Das zweite Rumpfelement 7 ist an der dem Gehäusedeckel 4 abgewandten Seite des ersten Rumpfelements 6 befestigt. Der Lagerdeckel 8 ist wiederum an der dem ersten Rumpfelement 6 abgewandten Seite des Rumpfelements 7 befestigt.

Das erste Rumpfelement 6 des Lagerträgers 5 umfasst im Wesentlichen eine kreiszylindrische Außenwandung 11. Das zweite Rumpfelement 7 umfasst eine Außenwandung 12, die im gezeigten Ausführungsbeispiel eine konische Form aufweist und sich vom ersten Rumpfelement 6 in Richtung Lagerdeckel 8 verjüngt. An der Außenmantelfläche der Außenwandung 12 des Lagerträgers 5 bzw. des zweiten Rumpfelements 7 sind sich im Wesentlichen in axialer Richtung erstreckende Kühlrippen 13 vorgesehen.

Am Lagerträger 5 bzw. am zweiten Rumpfelement 7 ist an der dem ersten Rumpfelement 6 abgewandten Seite eine Lüfterhaube 14 befestigt. Die Lüfterhaube 14 umgibt dabei den Lagerdeckel 8 und erstreckt sich zumindest teilweise über die Kühlrippen 13 des Lagerträgers 5 bzw. des zweiten Rumpfelements 7.

Die Pumpenanordnung weist eine um eine Drehachse A drehbar antreibbare Pumpenwelle 15 auf. Diese erstreckt sich von einer mittels des Hydraulikgehäuses 3 und des Gehäusedeckels 4 begrenzten Strömungskammer 16 durch eine Öffnung im Gehäusedeckel 4 und weiter durch das erste Rumpfelement 6, das zweite Rumpfelement 7, den Lagerdeckel 8 und die Lüfterhaube 14.

An einem innerhalb der Strömungskammer 16 liegenden Ende 17 der Pumpenwelle 15 ist ein Laufrad 18 zum Fördern eines Mediums befestigt. Ein dem Wellenende 17 gegenüberliegendes Ende 19 der Pumpenwelle 15 ist an einer nicht dargestellten Antriebsvorrichtung, beispielsweise ein Antriebsmotor, vorzugsweise ein Elektromotor, angeschlossen.

In einem Bereich nahe des Gehäusedeckels 4 weist der Lagerträger 5 bzw. in einem Bereich nahe des zweiten Rumpfelements 7 weist das erste Rumpfelement 6 in seinem Inneren eine erste Lageraufnahme 20 zu Aufnahme eines ersten Lagers 21 auf. Eine zweite Lageraufnahme 22 zur Aufnahme eines zweiten Lagers 23 ist in einem Bereich nahe des Lagerdeckels 8 vorgesehen. Mittels der beiden Lager 21 und 23 wird die um die Drehachse A drehbare Pumpenwelle 15 gelagert.

Innerhalb des Lagerträgers 5 ist zwischen dem ersten Lager 21 und dem zweiten Lager 23 ein Förderelement 24 vorgesehen, das an der Pumpenwelle 15 ausgebildet oder als separates Element an der Pumpenwelle 15 angeordnet bzw. befestigt ist.

Nahe der ersten Lageraufnahme 20 ist im Lagerträger 5 bzw. im ersten Rumpfelement 6 wenigstens eine Kammer 25 vorgesehen, die im Wesentlichen die Pumpenwelle 15 umgibt. Die Kammer 25 wird im gezeigten Beispiel im Wesentlichen von einem radialen Flansch 26, des zweiten Rumpfelements 7, mit dem dieses an dem ersten Rumpfelement 6 befestigt wird, einer sich in Richtung zur Drehachse A hin erstreckenden ersten Wandung 27, der ersten Lageraufnahme 20, die im Wesentlichen einer axialen, sich parallel zur Drehachse A ersteckenden zweiten Wandung 28 entspricht, und durch einen Teil der Außenwandung 11 begrenzt. Die radiale erste Wandung 27 verbindet die Außenwandung 11 mit der ersten Lageraufnahme 20 bzw. mit der zweiten Wandung 28. In der axialen Wandung 28 ist wenigstens eine Durchgangsbohrung 29 vorgesehen.

Im Inneren des Lagerträgers 5 bzw. im Wesentlichen im Inneren des zweiten Rumpfelements 7 ist ein die Pumpenwelle 15 umgebender Füllkörper 30 vorgesehen. Er erstreckt sich von der ersten Lageraufnahme 20 zur zweiten Lageraufnahme 22. Der Füllkörper 30 liegt mit einer ersten Stirnseite 31 an dem ersten Rumpfelement 6 an. Der Füllkörper 30 weist einen im Wesentlichen hohlzylindrischen Aufbau auf und umgibt die Pumpenwelle 15. Er umfasst eine der Pumpenwelle 15 zugewandte Innenwandung 32 und eine der Pumpenwelle 15 abgewandte Außenwandung 33. Im gezeigten Ausführungsbeispiel weist die Außenwandung 33 einen kegel- oder kegelstumpfartigen Verlauf auf. Innenwandung 32 und Außenwandung 33 bilden einen Hohlraum 34, wobei Verbindungsstege 35 vorgesehen sein können, die die Innenwandung 32 mit Außenwandung 33 verbinden und den Füllkörper 30 stabiler machen. Im gezeigten Ausführungsbeispiel ist der Füllkörper 30 derart angeordnet und in seiner radialen Ausdehnung derart dimensioniert, dass zwischen Füllkörper 30 und Pumpenwelle 15 ein erster Ringraum 36 und zwischen Füllkörper 30 und der Außenwandung 12 des Lagerträgers 5 bzw. des zweiten Rumpfelements 7 ein zweiter Ringraum 37 entsteht.

Der erste Ringraum 36 ist bei dem gezeigten Ausführungsbeispiel kreiszylindrisch ausgebildet. Der zweite Ringraum 37 weist einen konischen Verlauf entsprechend dem Füllkörper 30 und der Außenwandung 12 des zweiten Rumpfelements 7 auf. Die radiale Ausdehnung des Förderelements 24 ist derart gewählt, dass sie in dem ersten Ringraum 36 anordbar ist.

Wie in der Fig. 2 gezeigt, ist die dem ersten Rumpfelement 6 zugewandte Stirnseite 31 des Füllkörpers 30 mittels eines ringscheibenartigen Deckels 38 fluiddicht verschlossen, sodass kein Öl in den Hohlraum 34 eindringen kann.

Im Bereich der zweiten Lageraufnahme 22, die mittels eines scheibenartigen Verbindungselementes 39 mit der Außenwandung 12 verbunden ist, erstreckt sich in axialer Richtung ein erster ringförmiger Vorsprung 40 in das Innere des zweiten Rumpfelements 7, an dem eine zweite, der ersten Stirnseite 31 gegenüberliegende Stirnseite 41 des Füllkörpers 30 zur Anlage kommt. Das Verbindungselement 39 ist einstückig mit der Außenwandung 12 und mit der zweiten Lageraufnahme 22 verbunden. Wenigstens eine Durchgangsbohrung 42 erstreckt sich durch das Verbindungselement 39.

In entgegengesetzter Richtung zum ringförmigen Vorsprung 40, erstreckt sich ein zweiter ringförmiger Vorsprung 43 in einen Bereich der innerhalb des Lagerdeckels 8 liegt. An der freien Stirnseite des ringförmigen Vorsprungs 43 ist wenigstens eine Aussparung 44 vorgesehen. In der wenigstens einen Aussparung 44 ist die Befestigungsfahne 45 eines Sicherungsringes zur Befestigung des zweiten Lagers 23 platziert. Zudem ist an der freien Stirnseite des ringförmigen Vorsprungs 43 eine Leiteinrichtung 46 angebracht. Die Leiteinrichtung 46 ist ringförmig ausgebildet und umgibt die Pumpenwelle 15. Zudem weist die Leiteinrichtung 46, im Schnitt gesehen, eine kalottenartige Form auf.

Innerhalb der Lüfterhaube 14 ist ein Lüfterrad 47 an der Pumpenwelle 15 angebracht.

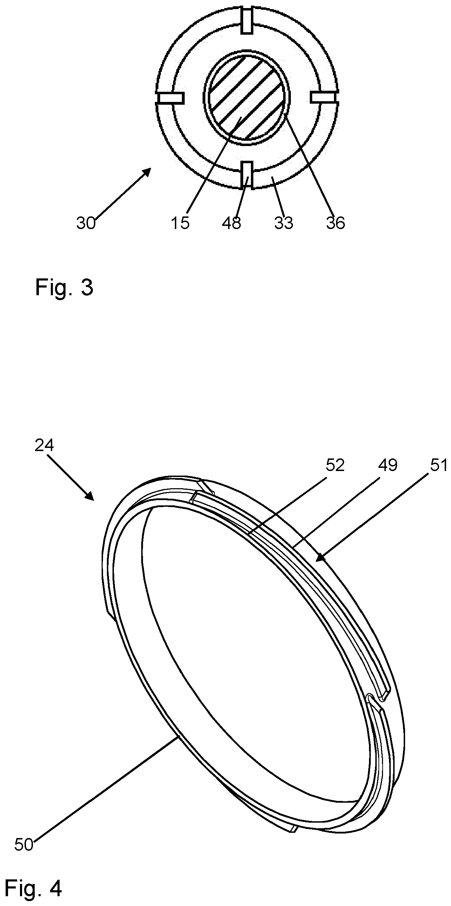

Bei einer alternativen Ausführungsform des Füllkörpers 30, wie sie in der Fig. 3 gezeigt ist, ist zwischen Füllkörper 30 und Pumpenwelle 15 der erster Ringraum 36 vorgesehen, jedoch erstreckt sich der Füllkörper in radialer Richtung bis an die Innenmantelfläche der Außenwandung 12 des Lagerträgers 5, wobei wenigstens eine der in der Fig. 3 dargestellten Nuten 48 an der Außenseite der Außenwandung 33 des Füllkörpers 30 vorgesehen ist. Zur besseren Überseicht sind in der Fig. 3 auch die geschnittene Pumpenwelle 15 und der erste Ringraum 36 dargestellt.

Bei einer alternativen Ausführungsform des ersten Rumpfelements 7 kann die Kammer 25 durch weitere, nicht dargestellte, sich von der Außenwandung 11 zur ersten Lageraufnahme 20 und von der ersten Wandung 27 zum Deckel 38 erstreckende Trennwandungen in einzelne Segmente unterteilt werden. Jedes Segment weist dabei eine Durchgangbohrung 29 in der axialen Wandung 28 auf.

Wird die in der Fig. 3 gezeigte Ausführungsform des Füllkörpers 30 mit einem in mehrere Kammern 25 segmentiertes zweites Rumpfelement 7 kombiniert, mündet wenigstens eine Nut 38 in eine der Kammern 25. Im Bedarfsfall sind dafür entsprechende Mittel zur mechanischen Kodierung zur eindeutigen Ausrichtung bzw. Positionierung des Füllkörpers 30 am ersten Rumpfelement 6 vorzusehen.

Die Fig. 4 zeigt das Förderelement 24 in einer detaillierten Darstellung. Das Förderelement 24 umfasst ein Ringelement 49 mit einer ersten Stirnseite 50 und einer zweiten der ersten Stirnseite 50 gegenüberliegenden zweiten Stirnseite 51. Auf der Außenmantelfläche des Ringelementes 49 ist wenigstens eine Schaufel 52 angeordnet. Bei dem gezeigten Ausführungsbeispiel sind vier gleiche Schaufeln 52 gleichmäßig über der Außenmantelfläche verteilt angeordnet. Die Schaufeln 52 erstrecken sich von einem Bereich nahe der ersten Stirnseite 50 in diagonaler Richtung über einen Kreisringausschnitt zu einem Bereich nahe der zweiten Stirnseite 51.

Bei dem in der Fig. 4 dargestellten Beispiel ist das Förderelement 24 schraubenartig ausgebildet, wobei die auf dem Ringelement 49 angeordneten Schaufeln 52 jeweils in etwa ein Viertel eines Gewindegangs bilden. Bei einer alternativen Ausführungsform kann sich das Ringelement in axialer Richtung derart ausdehnen, dass auf dem Ringelement 49 wenigstens ein vollständiger Gewindegang vorhanden ist.

Im Betrieb ist der in den Fig. 1 und Fig. 2 gezeigte durch das erste Rumpfelement 6 sowie einer in dem ersten Rumpfelement 6 angeordneten Dichtungsanordnung 53 von der Strömungskammer 16 abgetrennte Bereich der Pumpenanordnung 1 mit Öl gefüllt. Die Befüllung der Pumpenanordnung 1, insbesondere des Lagerträgers 5, mit Öl erfolgt bei der in der Fig. 1 bzw. der Fig. 2 gezeigten Ausführungsform der Pumpenanordnung 1 über eine nicht dargestellte, mit geeigneten Mitteln fluiddicht verschließbaren Öffnung im Lagerdeckel 8. Der Ölspiegel liegt dabei vorteilhafterweise über der Leiteinrichtung 46. Das Förderelement 24 versetzt das Öl im Lagerträger 5 in Zirkulation. Das Förderelement 24 ist im Lagerträger 5 zwischen dem ersten Lager 21 und dem zweiten Lager 23 angeordnet. Es fördert das Öl im ersten Ringraum 36 entlang der Pumpenwelle 15, im gezeigten Ausführungsbeispiel nach oben, in Richtung zweites Lager 23 und drückt das Öl durch das Lager 23 hindurch.

Nachdem das Öl das Lager 23 passiert hat, wird es durch die Leiteinrichtung 46 umgelenkt, es entfernt sich von der Pumpenwelle 15 und strömt durch die wenigstens eine Aussparung 44 und die Durchgangsbohrung 42 in den zweiten Ringraum 37 und in die Kammer 25 oder in eines der Segmente der Kammer 25. Bei der Verwendung eines Füllkörpers 30 gemäß der Fig. 3 fließt das Öl durch die wenigstens eine Nut 38 in die Kammer 25 oder in eines der Segmente der Kammer 25. In der Kammer 25 oder in den Segmenten der Kammer 25 können optional nicht dargestellte Ölfilter vorgesehen sein. Die Ölfilter können über die in der Außenwandung 11 des ersten Rumpfelements 6 vorgesehenen Öffnungen 54 installiert werden. Mit einem Deckel 55 sind die Öffnungen 54 fluiddicht verschlossen.

Das Öl wird anschließend vom Förderelement 24, durch die Durchgangsbohrung bzw. Durchgangsbohrungen 29 in Richtung Pumpenwelle 15 und durch das erste Lager 21 hindurch gesaugt. Es handelt sich um einen drucklosen Ölkreislauf. Somit ist eine Abdichtung des Lagerdeckels 8 zur Pumpenwelle 15 bei der gezeigten vertikalen Einbaulage des Lagerträgers 5 nicht erforderlich.

Im Betrieb wird durch Lagerreibung und Strömungsverluste Wärme erzeugt. Beim Durchströmen der Lager 21 und 23 wird ein Großteil der Wärme vom Öl aufgenommen. Der Großteil der vom Öl aufgenommenen Wärme wird beim Durchströmen des äußeren Ringraumes 37 über den Lagerträger 5 zur Umgebung abgegeben. Um den Wärmestrom zur Umgebung zu erhöhen und somit das Temperaturniveau im Lagerträger 5 zu senken besitzt der Lagerträger 5 bzw. das zweite Rumpfelement 7 an der Außenmantelfläche seiner Außenwandung 12 vorzugsweise eine Mehrzahl an Kühlrippen 13.

Der auf der Pumpenwelle 15 angeordnete Ventilator 47 erzeugt einen Luftstrom, der durch die Lüfterhaube 14 über den mit den Rippen 13 versehenen Bereich des Lagerträgers 5 geführt wird. Dadurch steigt der Wärmeübergang zwischen dem Lagerträger 5 und der Umgebungsluft an. Die Kühlwirkung wird weiter verbessert.

## Patentansprüche

1. Pumpenanordnung (1) zum Fördern eines Mediums mit einer von einem Hydraulikgehäuse (3) und einem Gehäusedeckel (4) gebildeten Strömungskammer (16), einer um eine Drehachse (A) drehbar antreibbaren Pumpenwelle (15), einem, an einem innerhalb der Strömungskammer (16) liegenden Ende (15) der Pumpenwelle (15) befestigten Laufrad (18), einem Lagerträger (5) und einem Schmier- und Kühlsystem mit einer im Lagerträger (5) ausgebildeten Ölumlaufförderung,
**dadurch gekennzeichnet,**
**dass** im Inneren des Lagerträgers (5) ein die Pumpenwelle (15) umgebender Füllkörper (30) vorgesehen ist, wobei
der Füllkörper (30) derart angeordnet und in seiner radialen Ausdehnung derart dimensioniert ist, dass
zwischen Füllkörper (30) und Pumpenwelle (15) ein erster Ringraum (36) vorgesehen ist und sich der Füllkörper (30) in radialer Richtung bis an die Innenmantelfläche der Außenwandung (12) des Lagerträgers (5) erstreckt, wobei wenigstens eine Nut (48) an der Außenseite der Außenwandung (33) des Füllkörpers (30) vorgesehen ist.

2. Pumpenanordnung (1) nach Anspruch 1, **dadurch gekennzeichnet, dass** der Lagerträger (5) in seinem Inneren eine erste Lageraufnahme (20) zu Aufnahme eines ersten Lagers (21) und eine zweite Lageraufnahme (22) zur Aufnahme eines zweiten Lagers (23) zur Lagerung der um eine Drehachse (A) drehbare Pumpenwelle (15) aufweist.

3. Pumpenanordnung (1) nach Anspruch 1 oder 2, **dadurch gekennzeichnet, dass** innerhalb des Lagerträgers (5) zwischen dem ersten Lager (21) und dem zweiten Lager (23) ein Förderelement (24) vorgesehen ist, das an der Pumpenwelle (15) ausgebildet oder als separates Element an der Pumpenwelle (15) angeordnet ist.

4. Pumpenanordnung (1) nach einem der Ansprüche 1 bis 3, **dadurch gekennzeichnet, dass** nahe der ersten Lageraufnahme (20) in dem Lagerträger (5) wenigstens eine Kammer (25) vorgesehen ist, die im Wesentlichen die Pumpenwelle (15) umgibt.

5. Pumpenanordnung (1) nach Anspruch 4, **dadurch gekennzeichnet, dass** die Kammer (25) durch Trennwandungen in einzelne Segmente unterteilt ist.

6. Pumpenanordnung (1) nach einem der vorhergehenden Ansprüche, **dadurch gekennzeichnet, dass** der Füllkörper (30) eine der Pumpenwelle (15) zugewandte Innenwandung (32) und eine der Pumpenwelle (15) abgewandte Außenwandung (33) umfasst, die einen Hohlraum (34) bilden.

7. Pumpenanordnung (1) nach einem der vorhergehenden Ansprüche, **dadurch gekennzeichnet, dass** sich ein ringförmiger Vorsprung (43) in einen Bereich innerhalb des Lagerdeckels (8) erstreckt, an dessen freier Stirnseite wenigstens eine Aussparung (44) vorgesehen ist.

8. Pumpenanordnung (1) nach einem der vorhergehenden Ansprüche, **dadurch gekennzeichnet, dass** an der freien Stirnseite des Vorsprungs (43) eine Leiteinrichtung (46) angebracht ist.

9. Pumpenanordnung (1) nach einem der vorhergehenden Ansprüche, **dadurch gekennzeichnet, dass** am Lagerträger (5) eine Lüfterhaube (14) befestigt ist, wobei innerhalb der Lüfterhaube (14) ein Lüfterrad (47) an der Pumpenwelle (13) angebracht ist.

10. Pumpenanordnung (1) nach einem der vorhergehenden Ansprüche, **dadurch gekennzeichnet, dass** das Förderelement (24) ein Ringelement (49) mit einer ersten Stirnseite (50) und einer zweiten der ersten Stirnseite (50) gegenüberliegenden zweiten Stirnseite (51) umfasst.

11. Pumpenanordnung (1) nach Anspruch 9, **dadurch gekennzeichnet, dass** auf der Außenmantelfläche des Ringelementes 42 wenigstens eine Schaufel 45 angeordnet ist, die sich von einem Bereich nahe der ersten Stirnseite 43 in diagonaler Richtung zu einem Bereich nahe der zweiten Stirnseite 44 erstreckt.

## Claims

1. Pump arrangement (1) for conveying a medium, having a flow chamber (16) which is formed by a hydraulics housing (3) and by a housing cover (4), having a pump shaft (15) which can be driven in rotation about an axis of rotation (A), having an impeller (18) which is fastened to an end (15) of the pump shaft (15) that is situated within the flow chamber (16), having a bearing carrier (5) and having a lubrication and cooling system with provision for oil circulation in the bearing carrier (5),
**characterized in that**
a filler body (30) which surrounds the pump shaft (15) is provided in the interior of the bearing carrier (5), wherein
the filler body (30) is arranged, and is dimensioned in terms of its radial extent, in such a way that
a first annular space (36) is provided between the filler body (30) and the pump shaft (15), and the filler body (30) extends in a radial direction as far as the inner lateral surface of the outer wall (12) of the bearing carrier (5), wherein provision is made of at least one groove (48) at the outer side of the outer wall (33) of the filler body (30).

2. Pump arrangement (1) according to Claim 1, **characterized in that**, in its interior, the bearing carrier (5) has a first bearing receptacle (20), for receiving a first bearing (21), and a second bearing receptacle (22), for receiving a second bearing (23), for the mounting of the pump shaft (15) rotatable about an axis of rotation (A).

3. Pump arrangement (1) according to Claim 1 or 2, **characterized in that** a conveying element (24) which is formed on the pump shaft (15) or which is arranged on the pump shaft (15) as a separate element is provided within the bearing carrier (5) between the first bearing (21) and the second bearing (23).

4. Pump arrangement (1) according to one of Claims 1 to 3, **characterized in that** at least one chamber (25) which substantially surrounds the pump shaft (15) is provided in the bearing carrier (5) close to the first bearing receptacle (20) .

5. Pump arrangement (1) according to Claim 4, **characterized in that** the chamber (25) is subdivided into individual segments by separating walls.

6. Pump arrangement (1) according to one of the preceding claims, **characterized in that** the filler body (30) has an inner wall (32), which faces toward the pump shaft (15), and an outer wall (33), which faces away from the pump shaft (15), which form a cavity (34) .

7. Pump arrangement (1) according to one of the preceding claims, **characterized in that** an annular projection (43) extends into a region within the bearing cover (8), at the free face side of which annular projection at least one cutout (44) is provided.

8. Pump arrangement (1) according to one of the preceding claims, **characterized in that** a guide device (46) is attached to the free face side of the projection (43).

9. Pump arrangement (1) according to one of the preceding claims, **characterized in that** a fan cover (14) is fastened to the bearing carrier (5), wherein, within the fan cover (14), a fan wheel (47) is attached to the pump shaft (13).

10. Pump arrangement (1) according to one of the preceding claims, **characterized in that** the conveying element (24) comprises an annular element (49) with a first face side (50) and with a second face side (51), which is situated opposite the first face side (50).

11. Pump arrangement (1) according to Claim 9, **characterized in that** at least one vane 45 is arranged on the outer lateral surface of the annular element 42 and extends from a region close to the first face side 43 in a diagonal direction to a region close to the second face side 44.

## Revendications

1. Agencement de pompe (1) servant à refouler un milieu, comportant une chambre d'écoulement (16) formée par un corps hydraulique (3) et un couvercle de corps (4), un arbre de pompe pouvant être entraîné de manière rotative autour d'un axe de rotation (A), une roue (18) fixée à une extrémité (15) de l'arbre de pompe (15) située à l'intérieur de la chambre d'écoulement (16), un support de palier (5) et un système de lubrification et de refroidissement présentant un refoulement de circulation d'huile réalisé dans le support de palier (5),
**caractérisé en ce**
**qu'**un corps de remplissage (30) entourant l'arbre de pompe (15) est prévu dans l'intérieur du support de palier (5),
le corps de remplissage (30) étant agencé et dimensionné dans son étendue radiale de telle sorte qu'un premier espace annulaire (36) soit prévu entre le corps de remplissage (30) et l'arbre de pompe (15) et que le corps de remplissage (30) s'étende dans la direction radiale jusqu'à la surface d'enveloppe intérieure de la paroi extérieure (12) du support de palier (5), au moins une rainure (48) étant prévue sur le côté extérieur de la paroi extérieure (33) du corps de remplissage (30).

2. Agencement de pompe (1) selon la revendication 1, **caractérisé en ce que** le support de palier (5) présente, dans son intérieur, un premier logement de palier (20) servant au logement d'un premier palier (21) et un deuxième logement de palier (22) servant au logement d'un deuxième palier (23) pour le support sur palier de l'arbre de pompe (15) rotatif autour d'un axe de rotation (A) .

3. Agencement de pompe (1) selon la revendication 1 ou 2, **caractérisé en ce qu'**un élément de refoulement (24) est prévu à l'intérieur du support de palier (5) entre le premier palier (21) et le deuxième palier (23), lequel élément de refoulement est réalisé au niveau de l'arbre de pompe (15) ou est agencé au niveau de l'arbre de pompe (15) en tant qu'élément séparé.

4. Agencement de pompe (1) selon l'une des revendications 1 à 3, **caractérisé en ce qu'**au moins une chambre (25) est prévue près du premier logement de palier (20) dans le support de palier (5), laquelle entoure sensiblement l'arbre de pompe (15).

5. Agencement de pompe (1) selon la revendication 4, **caractérisé en ce que** la chambre (25) est divisée en segments individuels par des parois de séparation.

6. Agencement de pompe (1) selon l'une des revendications précédentes, **caractérisé en ce que** le corps de remplissage (30) comprend une paroi intérieure (32) tournée vers l'arbre de pompe (15) et une paroi extérieure (33) opposée à l'arbre de pompe (15), lesquelles forment un espace creux (34).

7. Agencement de pompe (1) selon l'une des revendications précédentes, **caractérisé en ce qu'**une saillie annulaire (43) s'étend dans une région à l'intérieur du couvercle de palier (8), saillie au niveau du côté frontal libre de laquelle est prévu au moins un évidement (44).

8. Agencement de pompe (1) selon l'une des revendications précédentes, **caractérisé en ce qu'**un dispositif de guidage (46) est installé sur le côté frontal libre de la saillie (43).

9. Agencement de pompe (1) selon l'une des revendications précédentes, **caractérisé en ce qu'**un capot de ventilateur (14) est fixé au support de palier (5), une roue de ventilateur (47) étant installée sur l'arbre de pompe (13) à l'intérieur du capot de ventilateur (14).

10. Agencement de pompe (1) selon l'une des revendications précédentes, **caractérisé en ce que** l'élément de refoulement (24) comprend un élément annulaire (49) comportant un premier côté frontal (50) et un deuxième côté frontal (51) opposé au premier côté frontal (50).

11. Agencement de pompe (1) selon la revendication 9, **caractérisé en ce que** sur la surface d'enveloppe extérieure de l'élément annulaire 42 est agencée au moins une aube 45 qui s'étend à partir d'une région proche du premier côté frontal 43 dans une direction diagonale jusqu'à une région proche du deuxième côté frontal 44.
